# EUROPÄISCHE PATENTSCHRIFT

(11) **EP 1 038 259 B1**
(45) Veröffentlichungstag und Bekanntmachung des Hinweises auf die Patenterteilung: **09.04.2003**
(21) Anmeldenummer: 98965610.3
(22) Anmeldetag: 14.12.1998
(51) Int. Cl.: G06K 9/56

(54) **VORRICHTUNG ZUR BILDERFASSUNG**
IMAGING DEVICE
DISPOSITIF D'ENREGISTREMENT D'IMAGES

(30) Priorität: 18.12.1997 DE 19756561
(43) Veröffentlichungstag der Anmeldung: 27.09.2000
(73) Patentinhaber: Infineon Technologies AG, 81669 München (DE)
(72) Erfinder: JUNG, Stefan, D-80469 München (DE); THEWES, Roland, D-82194 Gröbenzell (DE); WEBER, Werner, D-80637 München (DE)
(74) Vertreter: Reinhard - Skuhra - Weise & Partner
(86) Internationale Anmeldenummer: DE9803660
(87) Internationale Veröffentlichungsnummer: WO99033018

(56) Entgegenhaltungen:
- US-A- 4 060 713
- US-A- 4 792 982
- US-A- 5 206 916
- B. H. MCCORMICK: "The Illinois Pattern Recognition Computer - ILLIAC III" IEEE TRANSACTIONS ON LECTRONIC COMPUTERS, Bd. EC-12, Nr. 12, Dezember 1963, XP002101346
- TREMBLAY M ET AL: "MAR: AN INTEGRATED SYSTEM FOR FOCAL PLANE EDGE TRACKING WITH PARALLEL ANALOG PROCESSING AND BUILT-IN PRIMITIVES FOR IMAGE ACQUISITION AND ANALYSIS" PROCEEDINGS OF THE INTERNATIONAL CONFERENCE ON PATTERN RECOGNITION, ATLANTIC CITY, JUNE 16 - 21, 1990, Bd. 2, Nr. CONF. 10, 16. Juni 1990, Seiten 292-298, XP000166504 INSTITUTE OF ELECTRICAL AND ELECTRONICS ENGINEERS

## Beschreibung

Die vorliegende Erfindung betrifft eine miniaturisierte Vorrichtung zur Bilderfassung, die insbesondere zur Aufnahme von Fingerabdrücken geeignet ist.

Für eine automatische Erkennung eines Bildes mit typischer Strukturierung, wie z. B. bei einem Fingerabdruck, ist neben einer Einheit für die Aufnahme des Bildes auch eine Einheit zur Verarbeitung des Bildes und zur Extraktion wesentlicher Bestandteile, wie z. B. der für einen Fingerabdruck charakteristischen Minutien (minutiae), erforderlich. Bisherige Lösungen, von denen eine z. B. in dem IBM Technical Disclosure Bulletin 17, 406-407 (1974) beschrieben ist, benötigen aufwendige Schaltungen, die viel Platz und Energie verbrauchen. Es wurden daher zur Aufnahme von kleinen Bildern wie z. B. Fingerabdrücken von der Verarbeitungs- und Auswerteeinheit getrennte Sensoreinheiten verwendet. Die Sensoreinheiten bestehen aus einer Vielzahl von Einzelsensorelementen, die in einem Raster angeordnet sind. Die Verarbeitungseinheit besteht zumeist aus einem Micro Controller und/oder einem digitalen Signalprozessor. Solche hybriden Systeme sind jedoch für eine Anwendung als Massenprodukt zu teuer, so daß derartige Aufbauten für eine ganze Reihe von Anwendungsbereichen zu aufwendig sind. Die Algorithmen zur Auswertung des erfaßten Bildes sind oft sehr kompliziert, z. B. insbesondere dann, wenn es wie in der angegebenen IBM-Schrift darum geht, besondere Charakteristika des aufgenommenen Bildes zu extrahieren und mit Referenzen zu vergleichen.

In der Veröffentlichung von A. P. Fitz und R. J. Green: "Fingerprint pre-processing on a hexagonal grid", in European Convention on Security and Detection, London 1995, pp. 257-260, ist ein Verfahren zur Aufnahme und Verarbeitung von Fingerabdrücken auf einem sechseckig unterteilten Raster beschrieben. Bei diesem Verfahren werden zur Vereinfachung eines Schwarzweißbildes Teilraster aus jeweils 7 in einem Sechseck angeordneten einzelnen Sechsecken bearbeitet. Eine Weiterbildung dieses Verfahrens ist beschrieben in der Veröffentlichung von Richard C. Staunton: " An analysis of hexagonal thinning algorithms and skeletal shape representation", in Pattern Recognition 29, 1131-1146, (1996). Mit dem beschriebenen Algorithmus werden breite Linien des Bildes auf die geringstmögliche Breite reduziert.

In der Veröffentlichung von W. Weber e. a.: "On the Application of the Neuron MOS Transistor Principle for Modern VLSI Design" in IEEE Transactions on Electron Devices 43, 1700-1708 (1996) sind Transistorstrukturen beschrieben, mit denen Logikschaltungen mit Gewichtungen der Eingangsgrößen aufgebaut werden können.

In der Patentschrift US-A-4 792 982 wird eine Anordnung von mit Prozessorelementen integrierten optischen Sensoren veroffentlicht.

Aufgabe der vorliegenden Erfindung ist es, eine Vorrichtung zur Bilderfassung anzugeben, die zur Anwendung bei kleinen Abmessungen geeignet ist und die geeignet ist, Eigenheiten einer Linienstruktur des Bildes zu erfassen und zu verarbeiten.

Diese Aufgabe wird mit der Vorrichtung mit den Merkmalen des Anspruchs 1 gelöst. Ausgestaltungen ergeben sich aus den abhängigen Ansprüchen.

Bei der erfindungsgemäßen Vorrichtung wird ein Bild, z. B. eines Fingerabdruckes, mittels einer Vielzahl von Sensorelementen erfaßt, die auf einem Raster mit vorzugsweise sechsekkiger Grundstruktur angeordnet sind. Zu jedem Sensorelement ist ein eigenes Prozessorelement vorhanden, das entsprechend den Unterteilungen des Rasters in der Nähe des jeweiligen Sensorelementes angeordnet ist. Die Prozessorelemente sind dafür vorgesehen, Werte, die aus einem von dem Sensorelement gelieferten Meßwert resultieren, vorzugsweise eine logische '0' oder '1', zu speichern und geeignet implementierte Algorithmen auszuführen, um den gespeicherten Wert abzuändern, falls gewisse Bedingungen an diesen Wert und Werte aus Speichern benachbarter Prozessorelemente erfüllt sind. Diese Algorithmen können insbesondere dafür vorgesehen sein, Unregelmäßigkeiten im erfaßten Bild, die für die Erfassung der Grundstruktur unerheblich sind, zu eliminieren. Außerdem können mit diesen Algorithmen die Konturen des Bildes z. B. dadurch deutlicher hervorgehoben werden, daß breite Linien auf eine durch das Raster vorgegebene minimale Standardbreite reduziert werden. Falls die Vorrichtung zur Erfassung und Identifikation von Fingerabdrücken vorgesehen ist, können in den Prozessorelementen Auswertealgorithmen implementiert sein, mit denen charakteristische Stellen (Minutien, wie z. B. Endpunkte und Verzweigungen der Linien) festgestellt und mit abgespeicherten Referenzen verglichen werden können.

Ein einzelnes Element der erfindungsgemäßen Vorrichtung enthält daher jeweils ein Sensorelement und ein für die Verarbeitung vorgesehenes Prozessorelement mit einer Speichereinheit. Eine solche Einheit der Vorrichtung kann daher als Schaltung mit den Verfahren zur Herstellung mikroelektronischer Komponenten hergestellt werden. Jedes Prozessorelement ist mit einer aus den übrigen Prozessorelementen jeweils fest gewählten Gruppe von Prozessorelementen derart verbunden, daß das Prozessorelement von den verbundenen Prozessorelementen Werte übermittelt bekommen kann. Vorzugsweise ist jedes Prozessorelement auf diese Art und Weise mit den benachbarten Prozessorelementen (bei einem hexagonalen Raster sechs Prozessorelemente) verbunden. Das Prozessorelement gibt den in seiner Speichereinheit vorhandenen Wert an die (z. B. sechs) benachbarten Prozessorelemente weiter und erhält über jeweils einen zugeordneten Eingang von diesen Prozessorelementen den Wert übermittelt, der von dem jeweiligen benachbarten Prozessorelement gespeichert wurde. Die Gruppe der mit einem Prozessorelement verbundenen Prozessorelemente muß nicht notwendig die diesem Prozessorelement zunächst benachbarten Prozessorelement umfassen, sondern kann, angepaßt an die jeweils implementierten Algorithmen, zusätzlich oder ausschließlich entferntere Prozessorelemente umfassen.

Die Verbindungen der Prozessorelemente untereinander werden vorzugsweise durch elektrisch leitende Verbindungen gebildet. Die Verwendung eines Rasters, das durch eine Parkettierung mit gleich großen, vorzugsweise regelmäßigen, Sechsecken gebildet wird, als Grundlage für die Anordnung der einzelnen Einheiten, die jeweils ein Sensorelement und ein Prozessorelement umfassen, hat den Vorteil, daß die Erfassung der Bilder besonders effizient im Hinblick auf die erforderliche Weiterverarbeitung erfolgt. Das ergibt sich aus der Dichte der Parkettierung, der Zahl vorhandener nächster Nachbarn und der vorhandenen Symmetrie.

Der besondere Vorteil der erfindungsgemäßen Vorrichtung liegt darin, daß sehr kleine Bildstrukturen erfaßt werden können, da die Einheiten, aus der die Vorrichtung zusammengesetzt ist, die Prozessorelemente enthalten und nur eine geringe Fläche erfordern. Die Prozessorelemente arbeiten vollständig parallel und werden durch globale Takt-, Versorgungs- und Steuerleitungen gesteuert. Durch die globalen Steuerleitungen können die Prozessorelemente in mehrere bestimmte Zustände konfiguriert werden, die jeweils einem Verarbeitungsschritt mittels eines Algorithmus entsprechen. Wegen der Integration der Prozessorelemente innerhalb des für die Bilderfassung vorgesehenen Rasters ist die Verarbeitungsgeschwindigkeit der Daten sehr hoch, und es wird nur wenig Energie verbraucht. Obwohl jedes Prozessorelement als Low-power-Schaltung realisiert werden kann und in diesem Fall relativ langsam arbeitet, wird durch die parallele Verarbeitung eine sehr gute Funktionalität (performance) des Gesamtsystems erreicht.

Vorzugsweise werden Ausgänge der Prozessorelemente am Rand des Rasters auf ihren freien Eingang zurückgekoppelt, so daß an den Rändern quasi spiegelsymmetrische Randbedingungen gelten. Das Feld der Anordnung kann durch am Rand befindliche Adressierungsschaltungen sequentiell ausgelesen werden.

Ein einzelnes Prozessorelement bildet einen primitiven Automaten. Es verfügt über einen Speicher, in dem ein einem Meßwert des Sensorelementes zugeordneter Wert gespeichert werden kann, sowie eine Logikschaltung, die aus diesem Wert und den an den Eingängen des Prozessorelementes anliegenden Werten der verbundenen Prozessorelemente einen neuen gültigen Wert bestimmt, der in dem Speicher statt des alten Wertes abgelegt wird. Vorzugsweise hat das Prozessorelement eine Speichereinheit mit zwei Zustandsspeichern, von denen jeweils nur einer aktiv ist. In dem einen Speicher kann z. B. eine logische '0' oder '1' abgespeichert werden, die dem Meßwert des betreffenden Sensorelementes zugeordnet wird. In dem anderen Speicher wird der dazu komplementäre Wert (d. h. in dem Beispiel eine logische '1' bzw. '0') abgespeichert, so daß die Gesamtheit dieser zweiten Speicher das invertierte Bild enthält.

Es folgt eine Beschreibung der erfindungsgemäßen Vorrichtung anhand der Figuren 1 bis 11.
- Figur 1: zeigt die Anordnung der Sensorelemente und Prozessorelemente im Beispiel eines hexagonalen Rasters.
- Figur 2a: zeigt ein Schema der Eingänge und Ausgänge eines Prozessorelementes für das Beispiel eines hexagonalen Rasters.
- Figur 2b: zeigt ein Blockdiagramm für den Aufbau eines Prozessorelementes.
- Figur 3: zeigt verschiedene Konstellationen für von verbundenen Prozessorelementen gespeicherte Werte.
- Figur 4: zeigt eine Ausführung der Schaltung eines Prozessorelementes.
- Figur 5: zeigt ein alternatives Ausführungsbeispiel zur Schaltung eines Prozessorelementes.

- Figuren 6-10: zeigen Schaltpläne der Schaltungsblöcke in Figur 5.
- Figur 11: zeigt ein MS-RS-FF, das als Speichereinheit der Vorrichtung entsprechend den Figuren 5 bis 10 geeignet ist.

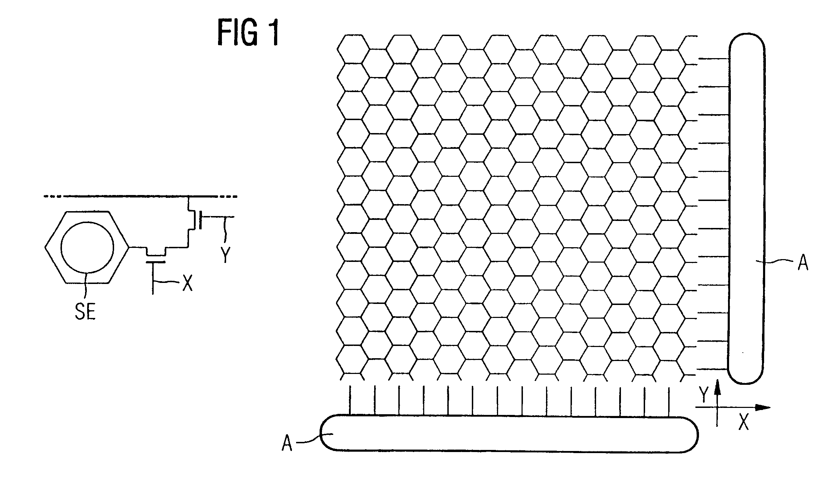

Figur 1 zeigt ein Schema für die erfindungsgemäße Vorrichtung in Aufsicht. In einem Raster, das in diesem Beispiel durch gleichmäßige Sechsecke gebildet ist, sind die einzelnen Sensorelemente SE angeordnet. Auf der linken Seite von Figur 1 ist als Beispiel ein solches Sensorelement mit einer kreisförmigen Sensorfläche und mit Auswahltransistoren für die X-Richtung und die Y-Richtung vergrößert dargestellt. Die Sensorelemente können andere geometrische Formen aufweisen, insbesondere (z. B. sechseckige) Abmessungen entsprechend der Unterteilung des Rasters besitzen. Jedem Sensorelement ist ein Prozessorelement zugeordnet, das vorzugsweise unmittelbar unterhalb des Sensorelementes im Bereich der betreffenden Teilfläche des Rasters in der Vorrichtung integriert ist.

Zum Auslesen des Sensorfeldes können z. B. Auswahlschaltungen A (z. B. Pointer-Schaltungen) vorhanden sein, die in diesem Beispiel die Einheiten des Sensorfeldes in X-Richtung und Y-Richtung ansteuern. Auf diese Weise können die von den Prozessorelementen gespeicherten Werte ausgelesen werden. Dieses Vorgehen entspricht im Prinzip dem Auslesen eines Matrixspeichers. Wesentlich für die erfindungsgemäße Vorrichtung ist es, daß die Prozessorelemente jeweils in der Nähe der Sensorelemente in dem Raster integriert vorhanden sind. Wenn diese Vorrichtung als Fingerabdrucksensor vorgesehen ist, ist es vorteilhaft, wenn das einzelne Sensorelement für eine kapazitive Messung im wesentlichen als Kondensatorplatte innerhalb einer strukturierten, elektrisch leitfähigen Schicht ausgebildet und unter einer Auflagefläche für eine Fingerspitze angeordnet ist. Das Sensorelement oder das zugeordnete Prozessorelement verfügt dann über eine Schaltung, mit der eine logische '0' oder '1' generiert werden kann in Abhängigkeit von der von dem Sensorelement mittels einer gemessenen Ladung oder Spannung festgestellten Kapazität.

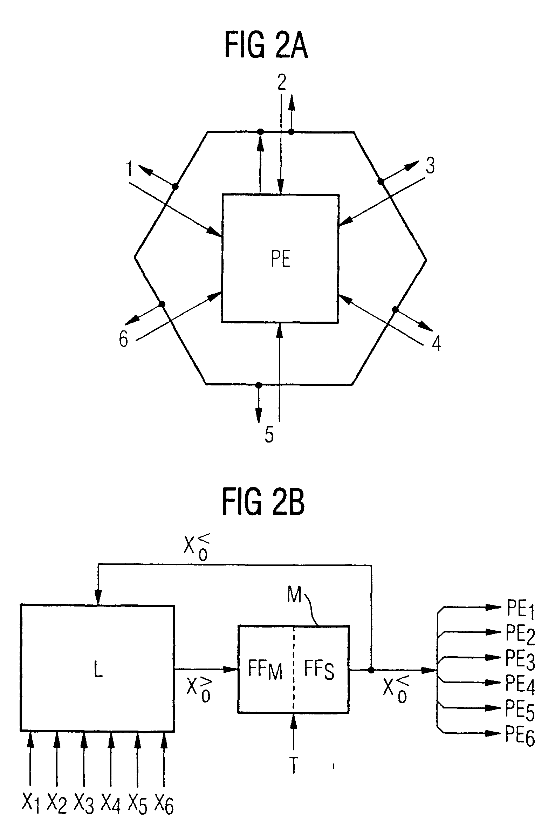

Bei einer bevorzugten Ausführungsform der Vorrichtung wird das in Figur 1 dargestellte hexagonale Raster verwendet und jedes Prozessorelement mit den sechs in diesem Raster nächst benachbarten Prozessorelementen verbunden. Figur 2a zeigt ein solches Prozessorelement PE mit einem Ausgang, der auf sechs Ausgänge 1, 2, 3, 4, 5 und 6 zu den sechs benachbarten Prozessorelementen verzweigt ist. Das Prozessorelement verfügt außerdem über je einen Eingang für jedes der sechs benachbarten Prozessorelemente. Auf diese Weise kann ein in der Speichereinheit des Prozessorelementes abgespeicherter Wert an die sechs benachbarten Prozessorelemente weitergegeben werden.

In Figur 2b ist die prinzipielle Funktionsweise des Prozessorelementes anhand eines Blockdiagrammes wiedergegeben. Die Werte der verbundenen Prozessorelemente, in diesem Beispiel die sechs Werte X₁, X₂, X₃, X₄, X₅ und X₆ der benachbarten sechs Prozessorelemente, werden zusammen mit dem von dem Prozessorelement selbst abgespeicherten Wert X₀^{<} einer Logikschaltung L zugeführt. Die Logikschaltung verarbeitet diese Werte, um so einen neuen Wert X₀^{>} zu errechnen. Dieser Wert X₀^{>} wird der Speichereinheit M zugeführt, die in einer bevorzugten Ausführungsform, die in Figur 2b als Beispiel eingezeichnet ist, durch zwei Flip-Flops, die als Master-Slave-RS-Flip-Flop geschaltet sind, gebildet wird. In dem Master-Flip-Flop (linkes Flip-Flop FF_{M} in der Figur) wird der neu bestimmte Wert gespeichert und bei Vorliegen gewisser Bedingungen gesteuert durch ein angelegtes Taktsignal T in das Slave-Flip-Flop (rechtes Flip-Flop FF_{S} in der Figur) weitergeschoben. Das Slave-Flip-Flop enthält jeweils den Wert, der dem alten Zustand des betreffenden Bildpunktes (Pixel) entspricht. Dieser Wert X₀^{<} wird der Logikschaltung zugeführt, damit die Berechnung des neuen Wertes X₀^{>} unter Berücksichtigung des alten Wertes erfolgen kann. Der jeweils aktuelle Wert X₀^{<} des Slave-Flip-Flops wird an die Ausgänge, in diesem Beispiel sechs Ausgänge, zu den benachbarten Prozessorelementen PE₁, PE₂, PE₃, PE₄, PE₅ und PE₆, gelegt. Die Verwendung eines derartigen Speichers hat den Vorteil, daß die Bewertung für alle Bildpunkte anhand der gespeicherten (alten) Werte erfolgen kann und erst im Anschluß daran die neuen Werte abgespeichert werden, so daß für die Bewertung in jedem Fall die alten Werte zur Verfügung stehen. Es treten daher beim Durchführen von Algorithmen zur Verarbeitung der gespeicherten Werte keine Verfälschungen auf, die auftreten könnten, wenn teils alte, teils bereits neue Werte von den Prozessorelementen verarbeitet werden.

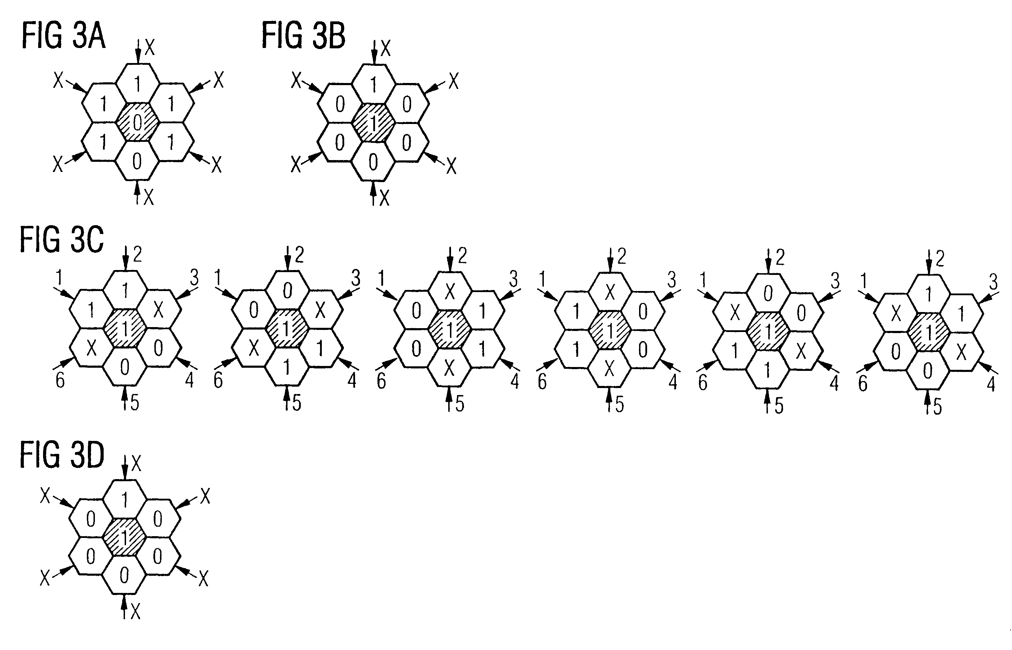

Die Prozessorelemente können z. B. dafür eingerichtet sein, mehrere Algorithmen durchzuführen, mit denen die Struktur des erfaßten Bildes vereinfacht oder in der Konturierung verbessert werden kann. Bei der Erfassung eines Fingerabdruckes wird ein von der Struktur des Fingerabdruckes abhängiger Meßwert des einzelnen Sensorelementes in eine logische '0' oder '1' umgewandelt. Man erhält so eine Darstellung des Fingerabdruckes als Schwarzweißbild, dessen Auflösung der Größe des zugrundeliegenden Rasters entspricht. Dieses Bild wird durch Anwendung verschiedener Algorithmen verbessert, um insbesondere die charakteristischen Minutien herausarbeiten und damit den Fingerabdruck identifizieren zu können. In Figur 3a ist eine Anordnung aus sieben Zellen des Rasters dargestellt, wobei eine zentrale Zelle von sechs Zellen rings umgeben ist. Jede Zelle enthält ein eigenes Sensorelement und ein eigenes Prozessorelement mit einer Speichereinheit, in der der aktuelle Wert '0' oder '1' des betreffenden Bildpunktes gespeichert ist. Für eine solche Anordnung aus sieben Zellen wird im folgenden der Einfachheit halber die englische Bezeichnung "Template" verwendet. Zur Verarbeitung des erfaßten Bildes wertet das Prozessorelement den von ihm gespeicherten Wert zusammen mit den Werten der verbundenen, in diesem Fall sechs benachbarten, Prozessorelemente aus und bestimmt so einen neuen Wert. Die Algorithmen werden in geeigneter Weise nacheinander ausgeführt, wobei sie von dem jeweils betroffenen Prozessorelement nur dann ausgeführt werden, wenn die zugehörigen Bedingungen erfüllt sind.

Ein Algorithmus kann dafür vorgesehen sein, weiße Lücken in dem Schwarzweißbild aufzufüllen. Zu diesem Zweck können weiße Bildpunkte, denen z. B. der logische Wert '0' zugeordnet ist und die von mindestens 5 schwarzen Bildpunkten umgeben sind, in einen schwarzen Bildpunkt umgewandelt werden (s. Template in Figur 3a). Die Logikschaltung des Prozessorelementes stellt fest, daß der gespeicherte Wert '0' ist und daß von den verbundenen sechs Prozessorelementen mindestens fünf den Wert '1' übermitteln. Damit ist die Bedingung erfüllt, den weißen Bildpunkt in einen schwarzen Bildpunkt zu ändern, und das Prozessorelement speichert den Wert '1' ab. Bei der Verwendung einer Speichereinheit entsprechend Figur 2b mit einem Master-Slave-RS-Flip-Flop (in der Figur mit MS-RS-FF bezeichnet) wird der neue Wert gesteuert durch das Taktsignal T aus dem Master-Flip-Flop in das Slave-Flip-Flop übernommen.

Einzelne schwarze Bildpunkte, die aus einer größeren Struktur herausragen, können mit einem weiteren Algorithmus entfernt werden. Wenn ein Prozessorelement den Wert '1' gespeichert hat und von den benachbarten Prozessorelementen höchstens eines den Wert '1' übermittelt, wie der Fall ist, wenn das zugehörige Template wie in Figur 3b aussieht, kann das Prozessorelement als Ergebnis des zugehörigen Algorithmus den Wert '1' in den Wert '0' ändern. Die Kanten der Bildstruktur werden damit geglättet. Vorzugsweise wird dieser Algorithmus zuerst angewendet, um die Linienstruktur des Bildes deutlicher hervortreten zu lassen. Anschließend werden weiße Lücken aufgefüllt, indem der Wert des zentralen Bildpunktes in Templates entsprechend Figur 3a von '0' auf '1' gesetzt wird. Die Orientierung spielt jeweils keine Rolle, d. h. die in den Figuren 3a und 3b gezeichneten Templates können um Vielfache von 60° gedreht sein.

Die Verarbeitung der in Figur 3c gezeichneten Templates reduziert breite Linien auf Linien von 1 Pixel Breite. Die mit x bezeichneten Werte können '0' oder '1' sein und sind für den Algorithmus ohne Bedeutung. Wesentlich ist nur, daß zwei Paare verbundener Prozessorelemente vorhanden sind, so daß jeweils die beiden Prozessorelemente eines Paares den Wert '1' und die Prozessorelemente des anderen Paares den Wert '0' übermitteln. Die Prozessorelemente der Paare sind jeweils benachbart zueinander, und jedes Prozessorelement eines Paares ist nicht benachbart zu den Prozessorelementen des anderen Paares, so daß die beiden Paare, wie in Figur 3c für verschiedene Orientierungen des Templates dargestellt ist, parallel zueinander angeordnet sind. Dieser Algorithmus wird jeweils für ein Template der Figur 3c in dem gesamten Bild angewendet, danach für ein anderes Template der Figur 3c ebenfalls in dem gesamten Bild usw. für alle dargestellten Templates. Der Algorithmus wird mehrmals zyklisch in immer derselben Reihenfolge der Templates durchgeführt, die an sich beliebig ist und nicht der in der Figur 3c gezeigten Reihenfolge entsprechen muß.

Ein weiterer Algorithmus ist dafür vorgesehen, Linienenden festzustellen. Ein Ende einer ein Pixel breiten Linie ist in dem Template in Figur 3d wiedergegeben. Der letzte Bildpunkt einer Linie bildet das zentrale Element dieses Templates. Dieses Element hat daher den Wert '1', während von den benachbarten Bildpunkten nur einer den Wert '1' aufweist. Der Algorithmus setzt alle Werte von '1' auf '0' mit Ausnahme derjenigen Bildpunkte, die ein Ende einer Linie bilden. Man kann zusätzliche Information über die Richtung der Linie an den Endungen gewinnen, indem man den Algorithmus auch auf Templates anwendet, die gegenüber dem Template der Figur 3d um Vielfache von 60° gedreht sind. Diese Information über die Richtung kann zusätzlich zur Identifikation des Bildinhaltes (z. B. eines Fingerabdruckes) herangezogen werden.

Bei der Extraktion der Minutien eines Fingerabdruckes werden diese Algorithmen mehrfach hintereinander angewendet. Vorzugsweise wird zunächst der Algorithmus zum Entfernen einzelner schwarzer Bildpunkte und zum Glätten der Konturen der Linien angewendet. Danach werden weiße Lücken aufgefüllt. Dann werden abwechselnd der Algorithmus zum Dünnen der Linien (Templates gemäß Figur 3c) und der Algorithmus zum Entfernen einzelner schwarzer Bildpunkte so oft angewendet, bis ein deutlich konturiertes und alle wesentlichen Eigenheiten des Fingerabdrucks aufweisendes Bild resultiert. In Abhängigkeit von den Abmessungen des Rasters und der gewünschten Genauigkeit kann die Anzahl der Durchläufe dieser Algorithmen geeignet festgelegt werden. Anschließend wird der Algorithmus zum Auffinden der Endungen der Linien angewendet.

Vorzugsweise werden Speichereinheiten verwendet, die über zwei Speicher verfügen, so daß die aus den Meßwerten der Sensorelemente resultierenden Werte und die dazu komplementären Werte abgespeichert werden können. Die jeweils zweiten Speicher einer Speichereinheit enthalten daher das invertierte Bild, d. h. das Negativ des ursprünglichen Schwarzweißbildes. Mit diesem invertierten Bild können die Verzweigungspunkte der Linien aufgefunden werden, da die ebenfalls linienförmigen Zwischenräume zwischen den Linien an den Verzweigungspunkten der Linien enden, so daß die Enden der Linien des invertierten Bildes die Verzweigungspunkte der Linien des ursprünglichen Bildes markieren.

Die logischen und rechnerischen Operationen der angegebenen Algorithmen können als Schaltung in ausreichend miniaturisierter Form realisiert werden und daher in einem Prozessorelement implementiert werden, das unmittelbar dem Sensorelement innerhalb des Rasters der Vorrichtung zugeordnet ist. Durch die geeignete Verschaltung der Prozessorelemente untereinander ist es daher bei der erfindungsgemäßen Vorrichtung möglich, derartige Algorithmen von Prozessorelementen ausführen zu lassen, die in das Raster der Anordnung der Sensorelemente integriert sind und die gleichzeitig eine für die vorgesehene Verarbeitung des Bildes ausreichende Funktionalität aufweisen.

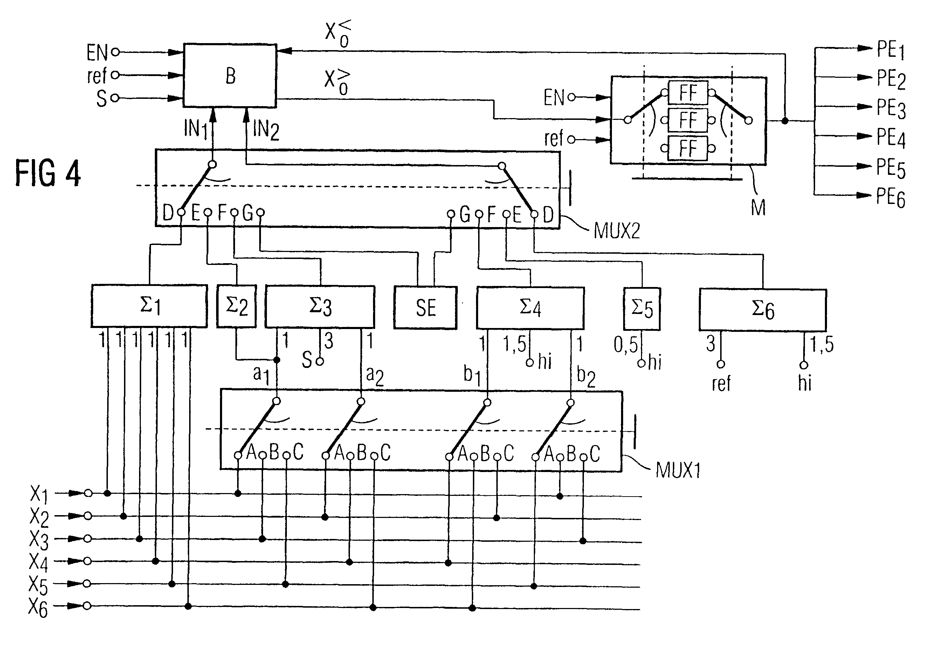

Zur Realisierung der Logikschaltung eines Prozessorelementes kann z. B. eine Neuron-MOS-Schaltungstechnik verwendet werden, mit der die angegebenen Algorithmen z. B. entsprechend dem Schaltschema der Figur 4 implementiert sein können. In der Schaltung ist ein Schaltungsblock B vorhanden mit einer Bewerterschaltung, der geeignet gewichtete Werte über eine Anzahl von jeweils paarweise umschaltbaren Neuron-MOS-Transistoren zugeführt werden. Die Bewerterschaltung kann z. B. aus einem Latch bestehen, das nach der Bewertung seinen Zustand beibehält. Die Eingänge EN (enable) und ref (reference) entscheiden, ob eine Bewertung durchgeführt wird oder nicht. Über den Eingang S kann die Bewerterschaltung veranlaßt werden, den negativen Ausgangswert zu liefern. Im Fall S=1, liefert die Schaltung z. B. den Wert '1', wenn der Wert am ersten Eingang IN1 größer ist als der Wert am zweiten Eingang IN2; falls S=0, liefert die Schaltung entsprechend den Wert '1', wenn der Wert am ersten IN1 kleiner ist als der Wert am zweiten Eingang IN2.

Die Schaltung umfaßt außerdem einen ersten Multiplexer (Mehrfachschalter) MUX1, einen zweiten Multiplexer MUX2 und sechs Summierer Σ₁, Σ₂, Σ₃, Σ₄, Σ₅ und Σ₆, die z. B. durch Neuron-MOS-Transistoren realisiert sein können. Die von den verbundenen Prozessorelementen gelieferten Werte X₁, X₂, X₃, X₄, X₅ und X₆ werden vom Eingang entsprechend den in Figur 4 eingezeichneten Verschaltungen dem ersten Summierer Σ₁ bzw. den Eingängen des ersten Multiplexers MUX₁ zugeführt. Zwischen den mehrmals vorhandenen Eingängen A, B und C des ersten Multiplexers wird jeweils simultan umgeschaltet, so daß jeweils die Eingangswerte an den Eingängen A oder die Eingangswerte an den Eingängen B oder die Eingangswerte an den Eingängen C mit den vier Ausgängen des ersten Multiplexers verbunden sind.

Der zweite Multiplexer MUX2 wird simultan umgeschaltet, so daß die beiden Ausgänge jeweils mit den beiden Eingängen D, E, F bzw. G verbunden sind. Jedes Paar von Neuron-MOS-Transistoren stellt durch die speziell eingestellten Kapazitätsverhältnisse eine bestimmte Art von Algorithmus dar (angedeutet durch die an den Eingängen der Summierer eingetragenen Zahlen), d. h. in dem Beispiel werden die Templates der Figur 3 repräsentiert. Die Summierer Σ₁ und Σ₆ bzw. Σ₂ und Σ₅ bzw. Σ₃ und Σ₄ werden zusammen jeweils durch Paare von Neuron-MOS-Transistoren gebildet. Falls der Eingang F gewählt wird, liegen ar den Eingängen IN1 und IN2 des Schaltungsblockes B entsprechend den Rechenoperationen der Summierer Σ₃ und Σ₄ die Werte a₁ + a₂ + 3S bzw. b₁ + b₂ + 1,5 an. Entsprechend der oben beschriebenen Beschaffenheit des Schaltungsblockes B ist im Fall S=1 zwischen den genannten Größen an den Eingängen des Schaltungsblockes B das Ungleichheitszeichen ">" und im Fall S=0 das Ungleichheitszeichen "<" für die Bewertung maßgebend.

Durch die Auswahl des Neuron-MOS-Transistorpaares (Eingänge D, E bzw. F des zweiten Multiplexers MUX2) können in dem Beispiel der Figur 4 drei der benötigten Algorithmen umgesetzt werden. Falls S=1, ref=1 und der zweite Multiplexer auf Eingang D geschaltet ist, liefern die Summierer Σ₁ und Σ₆ die Summe der Werte X₁ bis X₆ und den Wert 4,5, die miteinander verglichen werden durch das Ungleichheitszeichen ">". Es wird daher festgestellt, ob mindestens fünf der benachbarten Prozessorelemente den Wert '1' liefern.

Falls S=1 bzw. S=0, ref=0 und der zweite Multiplexer MUX2 auf den Eingang D geschaltet ist, liegen an den Eingängen IN1 und IN2 des Schaltungsblockes B die Summe der Werte X₁ bis X₆ bzw. der Wert 1,5 an. Es wird in der Bewerterschaltung festgestellt, ob die Summe der von den benachbarten Prozessorelementen übermittelten Werte größer (S=1) bzw. kleiner (S=0) als 1,5 ist. Das ist wichtig für die Algorithmen zur Eliminierung einzelner schwarzer Bildpunkte und zum Glätten der Linienränder bzw. für den Algorithmus zum Identifizieren der Endungen der Linien.

Mit einer Kombination der Summierer Σ₂ und Σ₅ und einer Schaltung des zweiten Multiplexers auf den Eingang E läßt sich ein Wert '1' innerhalb der Anordnung in drei verschiedenen Hauptrichtungen verschieben.

Wenn der zweite Multiplexer auf die Eingänge F geschaltet ist, werden die Werte a₁ + a₂ + 3S und b₁ + b₂ + 1,5 miteinander verglichen. Falls S=0, wird überprüft, ob der erste Wert kleiner ist als der zweite Wert; falls S=1, wird überprüft, ob der erste Wert größer ist als der zweite Wert. Das kann jeweils nur dann der Fall sein, wenn nicht a₁ und a₂ beide gleich '0' und b₁ und b₂ beide gleich '1' sind oder umgekehrt. Falls a₁ = a₂ = '0' bzw. '1' und b₁ = b₂ = '1' bzw. '0' gilt, liefert der Schaltungsblock B daher den Wert '0', was für den Algorithmus zum Ausdünnen der Linien gewünscht wird. Entsprechend der Verdrahtung der Eingänge sind die Werte a₁ und a₂ bzw. b₁ und b₂ jeweils zwei Paaren verbundener Prozessorelemente zugeordnet, deren Komponenten jeweils zueinander benachbart, aber nicht zu den Komponenten des anderen Paares benachbart sind.

Wenn zur Bewertung der durch die Neuron-MOS-Transistorpaare erzeugten gewichteten Potentiale ein Latch verwendet wird, so kann der Zustandspeicher durch ein beliebiges einstufiges Flip-Flop realisiert werden, da der aktuelle Zustand jeweils in der Bewerterschaltung gespeichert ist (d. h. die Bewerterschaltung ist das Master-Flip-Flop, das Flip-Flop des Zustandspeichers ist das Slave-Flip-Flop). Auch der Zustandsspeicher M hat einen EN-Eingang (enable), der darüber entscheidet, ob ein neuer Zustand übernommen wird oder nicht. Es können mehrere solche Zustandspeicher vorhanden sein, zwischen denen umgeschaltet werden kann, wie in dem in der Figur 4 eingezeichneten Speicher angedeutet ist. Damit können Zwischenzustände während der Verarbeitung zusätzlich gespeichert werden. Zum Einlesen des dem Meßwert der betreffenden Sensoreinheit SE zugeordneten Wertes '0' oder '1' wird der zweite Multiplexer MUX2 auf die Eingänge G geschaltet. Von dem Schaltungsblock B werden neue Werte des betreffenden Bildpunktes X₀^{>} an die Speichereinheit M weitergegeben. Da der alte Wert X₀^{<} in dem Bildpunkt als Randbedingung für die Bewertung maßgeblich ist, wird dieser alte Wert aus dem Speicher M dem Schaltungsblock B zugeführt (entspricht der in Figur 4 eingezeichneten Rückkopplung von X₀^{<}). Die alten Werte X₀^{<} werden auch den verbundenen Prozessorelementen PE₁, PE₂, PE₃, PE₄, PE₅ und PE₆ zugeleitet.

Die Logikschaltung in dem Schaltungsblock B ist vorzugsweise so beschaffen, daß eine Bewertung oder eine Übernahme eines neuen Wertes in den Zustandspeicher nur dann erfolgt, wenn der von dem bewertenden Prozessorelement selbst gespeicherte Wert geeignete Bedingungen erfüllt. Für die Algorithmen zum Glätten der Kanten, zum Ausdünnen der Linien und zum Auffinden der Endungen ist diese Bedingung, daß der gespeicherte Wert X₀^{<} = 1 ist; für den Algorithmus zum Auffüllen weißer Lücken muß der bisherige Zustand X₀^{<} = 0 sein. In dem Schaltungsblock B können Schaltungen vorhanden sein, die bewirken, daß bei einem Fehlen der einschlägigen Bedingung eine Bewertung gar nicht erst stattfindet, und der gespeicherte Wert ohne weiteres unverändert bleibt. Es werden daher beim Ausführen der Algorithmen immer nur die relevanten Prozessorelemente aktiviert, wie für die richtige Ausführung der Algorithmen erforderlich ist. Außerdem kann so die Verarbeitungsgeschwindigkeit erhöht und Energie eingespart werden.

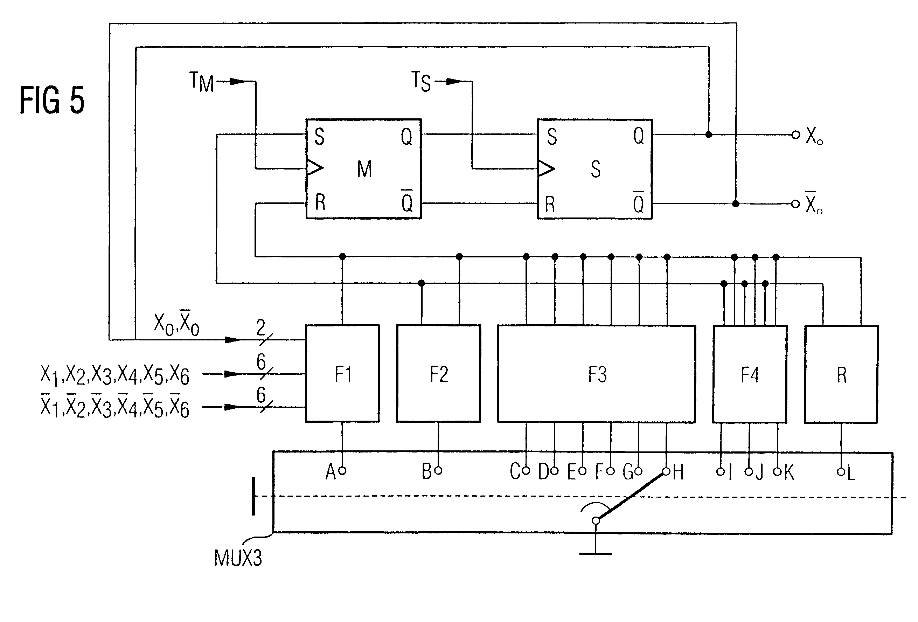

Die in Figur 5 dargestellte Schaltungsvariante besitzt mehrere Funktionsblöcke F1, F2, F3, F4 und R. Außerdem sind ein 1-aus-12-Decoder als Multiplexer MUX3 und ein spezielles Master-Slave-RS-Flip-Flop zur Speicherung des Zustandes und zur Durchführung der Bewertung vorhanden. Die Funktionsblöcke bestehen jeweils aus einer Anzahl von NMOS-Transistoren, die in geeigneter Weise als UND-Gatter und ODER-Gatter in Reihe bzw. parallel geschaltet sind und jeweils am Gate mit einem Logikpegel '0' oder '1' betrieben werden. Ein Funktionsblock hat zwei Anschlüsse, zwischen denen er je nach dem Zustand, in dem er sich befindet, stromdurchlässig ist oder nicht. Mehrere dieser Funktionsblöcke sind parallel geschaltet; es ist aber immer nur ein Funktionsblock über den Multiplexer MUX3 mit Masse verbunden. Die sechs Eingänge für die von den verbundenen Prozessorelementen übermittelten Werte X₁, X₂, X₃, X₄, X₅ und X₆ und für deren komplementäre Werte sind zur Vereinfachung der Darstellung in jeweils einer Linie zusammengefaßt.

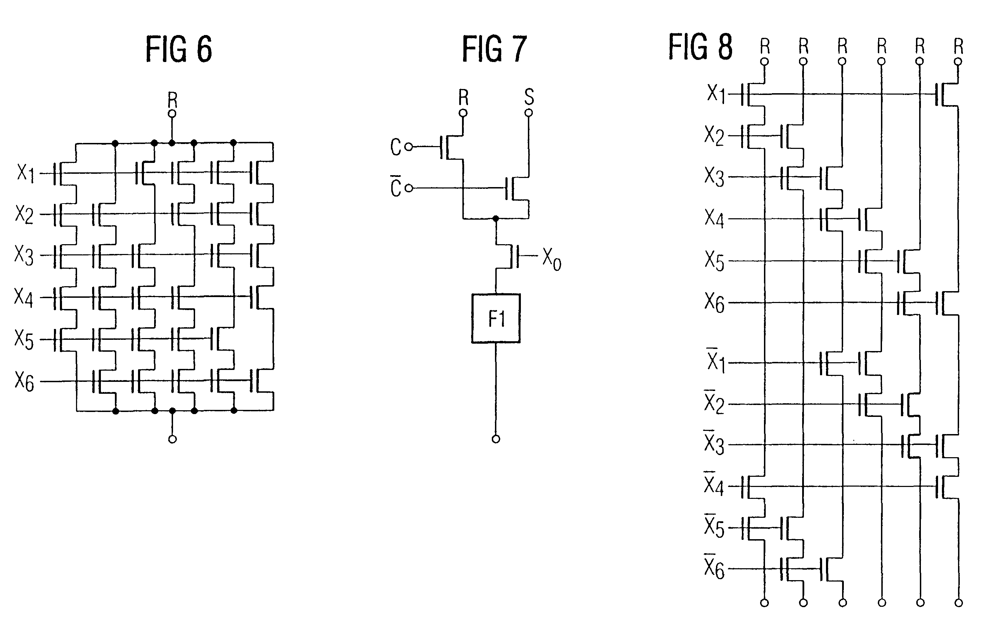

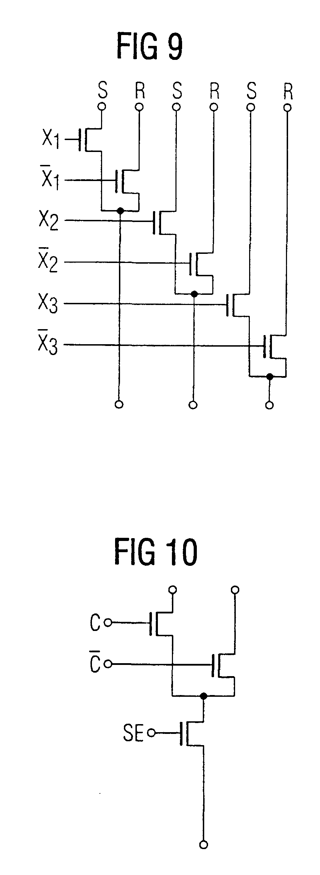

Figur 6 zeigt eine mögliche Ausgestaltung des Funktionsblokkes F1, Figur 7 des Funktionsblockes F2, Figur 8 des Funktionsblockes F3, Figur 9 des Funktionsblockes F4 und Figur 10 des Funktionsblockes R. Der Funktionsblock F1 schaltet gegen Masse kurz, wenn mindestens fünf der sechs Werte X₁ bis X₆ den logischen Wert '1' besitzen (zur Durchführung des Algorithmus, mit dem die Lücken aufgefüllt werden). Mit dem Funktionsblock F2 lassen sich die Algorithmen zum Glätten der Kanten und zum Identifizieren der Endungen der Linien durchführen. Durch die globale Steuergröße C (Figur 7) wird zwischen diesen Algorithmen umgeschaltet. Der Funktionsblock F3 dient dazu, den Algorithmus zum Ausdünnen der Linien durchzuführen. Mit dem Funktionsblock F4 lassen sich die Werte in den Bildpunkten der Linienendungen in den drei Hauptrichtungen des Rasters verschieben. Mit dem Funktionsblock R (Figur 10) wird der von dem Sensorelement gelieferte logische Wert (Eingang SE) eingelesen.

Wegen der verwendeten NMOS-Pass-Transistor-Logik liegt bei der in den Figuren dargestellten Beschaltung an den Eingängen R und S des Master-Slave-RS-Flip-Flops stets nur '0' (Massepotential) oder '1' (Anschluß offen, da Schalter gesperrt) an. Bei Einsatz einer komplementären Pass-Transistor-Logik kann man auch den jeweils invertierten logischen Pegel erhalten, was aber eine Verdoppelung des Flächenbedarf nach sich zieht.

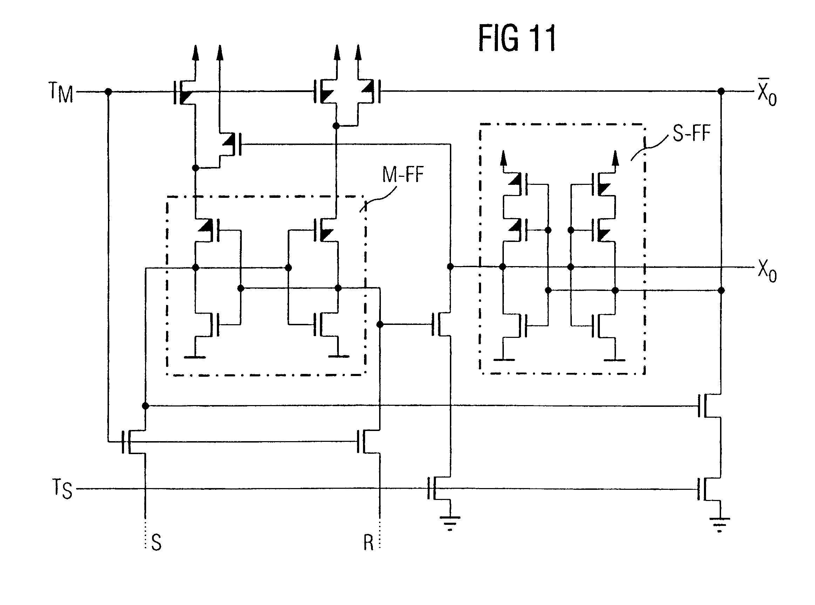

Ein Ausführungsbeispiel für einen geeigneten Zustandspeicher zu der Ausführung der Schaltung gemäß Figur 5 ist in Figur 11 dargestellt. Die Funktionsweise dieses speziellen Flip-Flops ist bevorzugt dafür geeignet, die beschriebenen Algorithmen in Verbindung mit den angegebenen Funktionsblöcken durchzuführen. Die vorhandenen Flip-Flops werden durch die Taktsignale T_{M} bzw. T_{S} gesteuert, die zeitlich zueinander versetzt sind. Durch eine Vervielfachung des Slave-Flip-Flops ist die Speicherung mehrerer Zustände möglich, wenn eine Auswahl über ergänzende Multiplexer erfolgt.

## Patentansprüche

1. Vorrichtung zur Bilderfassung,
- mit einer Anordnung von Sensorelementen (SE) in einem Raster,
- bei der zu jedem Sensorelement ein zugehöriges Prozessorelement (PE) entsprechend dem Raster integriert ist,
- bei der jedes Prozessorelement eine Speichereinheit (M) zur Speicherung von Werten besitzt und
- bei der jedes Prozessorelement mit den in dem Raster benachbarten Prozessorelementen derart verbunden ist, daß das Prozessorelement Werte, die von diesen benachbarten Prozessorelementen ausgegeben werden, aufnehmen kann,
**dadurch gekennzeichnet, daß**
- das Raster hexagonal und so dimensioniert ist, daß es zur Erfassung eines für eine Personenidentifikation ausreichend differenzierten Fingerabdrucks dienen kann,
- die Sensorelemente für eine kapazitive Messung innerhalb einer strukturierten, elektrisch leitfähigen Schicht ausgebildet sind,
- die Sensorelemente oder die jeweils zugeordneten Prozessorelemente über Schaltungen verfügen, mit denen eine logische '0' oder '1' generiert wird in Abhängigkeit von der von dem Sensorelement festgestellten Kapazität,
- die Prozessorelemente dafür eingerichtet sind, eine logische '0' oder '1' zu speichern, und
- jedes Prozessorelement dafür eingerichtet ist, Algorithmen durchzuführen, mit denen
a) der gespeicherte Wert von '1' auf '0' gesetzt wird, falls höchstens ein verbundenes Prozessorelement den Wert '1' übermittelt, oder
b) der gespeicherte Wert von '0' auf '1' gesetzt wird, falls mindestens fünf verbundene Prozessorelemente den Wert '1' übermitteln, oder
c) der gespeicherte Wert von '1' auf '0' gesetzt wird, falls mindestens zwei verbundene Prozessorelemente den Wert '1' übermitteln, oder
d) der gespeicherte Wert von '1' auf '0' gesetzt wird, falls zwei verbundene Prozessorelemente eines ersten Paares den Wert '1' übermitteln und zwei verbundene Prozessorelemente eines zweiten Paares den Wert '0' übermitteln und falls die zu demselben Paar gehörenden verbundenen Prozessorelemente in dem Raster zueinander benachbart und zu den Prozessorelementen des jeweils anderen Paares nicht benachbart sind.

2. Vorrichtung nach Anspruch 1,
bei der die Speichereinheiten (M) mindestens einen ersten Speicher und einen zweiten Speicher besitzen und
bei der die Prozessorelemente (PE) dafür eingerichtet sind, zu einem von dem Sensorelement (SE) übermittelten Meßwert einen von zwei möglichen Werten in den ersten Speicher und den jeweils anderen möglichen Wert in den zweiten Speicher abzuspeichern.

3. Vorrichtung nach Anspruch 1 oder 2,
bei der jedes Prozessorelement (PE) mit mindestens einer Neuron-MOS-Schaltung aufgebaut ist, mit der die von verbundenen Prozessorelementen übermittelten Werte in einer vorgegebenen Weise gewichtet und rechnerisch miteinander verknüpft und einer Bewertungsschaltung (B) zugeführt werden.

4. Vorrichtung nach Anspruch 3,
bei der in der Schaltung vorhanden sind
a) ein erster Multiplexer (MUX1) mit zwölf Eingängen (A, B, C), zwischen denen simultan umgeschaltet werden kann, so daß jeweils vier der Eingänge gleichzeitig ausgewählt sind, und mit vier Ausgängen (a₁, a₂, b₁, b₂),
b) ein zweiter Multiplexer (MUX2) mit acht Eingängen (D, E, F, G), zwischen denen simultan umgeschaltet werden kann, so daß jeweils zwei der Eingänge gleichzeitig ausgewählt sind, und mit zwei Ausgängen,
c) die Bewertungsschaltung (B) mit einem ersten Eingang (IN₁) und einem zweiten Eingang (IN₂), an die die Ausgänge des zweiten Multiplexers (MUX2) angeschlossen sind, und mit einem weiteren Eingang (S), über den die Bewertungsschaltung (B) veranlaßt werden kann, den logischen Wert '1' zu liefern, wenn der Wert am ersten Eingang (IN₁) größer ist als der Wert am zweiten Eingang (IN₂), oder statt dessen den logischen Wert '1' zu liefern, wenn der Wert am ersten Eingang (IN₁) kleiner ist als der Wert am zweiten Eingang (IN₂), und
d) sechs Summierer (Σ₁, Σ₂, Σ₃, Σ₄, Σ₅, Σ₆), von denen je zwei durch Paare von Neuron-MOS-Transistoren gebildet sind, wobei die von den verbundenen Prozessorelementen gelieferten Werte (X₁, X₂, X₃, X₄, X₅, X₆) dem ersten Summierer (Σ₁) und den Eingängen (A, B, C) des ersten Multiplexers (MUX1) zugeführt werden, so daß immer die Werte zweier Paare zueinander benachbarter, aber nicht zu dem jeweils anderen Paar benachbarter verbundener Prozessorelemente (X₁, X₂, X₄, X₅; X₃, X₄, X₆, X₁; X₅, X₆, X₂, X₃) an den Ausgängen des ersten Multiplexers (MUX1) anliegen, und
wobei Summierer (Σ₂, Σ₃, Σ₄) an die Ausgänge des ersten Multiplexers (MUX1) angeschlossen sind und jeweils ein Paar von Summierern (Σ₁, Σ₆; Σ₂, Σ₅; Σ₃, Σ₄) oder das Sensorelement (SE) an gleichzeitig ausgewählte Eingänge (D, E, F, G) des zweiten Multiplexers (MUX2) so angeschlossen ist, daß die vorgesehenen Algorithmen durch Umschalten der Multiplexer ausgeführt werden können.

5. Vorrichtung nach Anspruch 1 oder 2,
bei der jedes Prozessorelement mit mindestens einer NMOS-Pass-Transistor-Logikschaltung aufgebaut ist, die als Schalter zwischen einem Bezugspotential und einer Bewertungsschaltung (B) operiert.

6. Vorrichtung nach Anspruch 5,
bei der in der Schaltung vorhanden sind
a) Funktionsblöcke (Fl, F2, F3, F4, R) aus jeweils einer Anzahl von als UND-Gatter oder ODER-Gatter geschalteten NMOS-Transistoren,
b) ein Multiplexer (MUX3) mit einem Eingang und zwölf Ausgängen (A, B, C, D, E, F, G, H, I, J, K, L) und
c) ein Master-Slave-RS-Flip-Flop (M, S) zur Speicherung des Zustandes und zur Durchführung der Bewertung,
bei der die Funktionsblöcke zwischen dem Multiplexer (MUX3) und dem Master-Slave-RS-Flip-Flop (M, S) parallel geschaltet sind und immer nur ein Funktionsblock über den Multiplexer (MUX3) mit dem Bezugspotential verbunden ist,
bei der Eingänge für die von den verbundenen Prozessorelementen übermittelten Werte (X₁, X₂, X₃, X₄, X₅, X₆) und für deren komplementäre Werte an den Funktionsblöcken vorhanden sind, bei der der erste Funktionsblock (F1) einen Eingang (R) des Master-Flip-Flops (M) gegen das Bezugspotential kurzschließt, wenn mindestens fünf der sechs übermittelten Werte den logischen Wert '1' besitzen,
bei der der zweite Funktionsblock (F2) einen Eingang (R, S) des Master-Flip-Flops (M) gegen das Bezugspotential kurzschließt, wenn mindestens fünf der sechs übermittelten Werte den logischen Wert '1' besitzen und ein Signal (X₀) am Ausgang des Slave-Flip-Flops (S) einen vorgesehenen logischen Wert besitzt, wobei der betreffende Eingang mittels Transistoren durch eine globale Steuergröße (C) und deren Komplement gewählt wird,
bei der der dritte Funktionsblock (F3) einen Eingang (R) des Master-Flip-Flops (M) gegen das Bezugspotential kurzschließt, wenn die übermittelten Werte zweier durch den Multiplexer (MUX3) ausgewählter, zueinander benachbarter verbundener Prozessorelemente eines ersten Paares den logischen Wert '1' besitzen und die übermittelten Werte zweier zueinander benachbarter verbundener Prozessorelemente eines zweiten Paares, die zu den Prozessorelementen des ersten Paares nicht benachbart sind, den logischen Wert '0' besitzen,
bei der der vierte Funktionsblock (F4) einen Eingang (R, S) des Master-Flip-Flops (M) gegen das Bezugspotential kurzschließt, je nachdem, ob der übermittelte Wert eines durch den Multiplexer (MUX3) ausgewählten verbundenen Prozessorelementes in einer von drei vorgesehenen Richtungen den logischen Wert '0' oder '1' besitzt, und
bei der der fünfte Funktionsblock (R) einen Transistor aufweist, der durch den von dem Sensorelement (SE) gelieferten logischen Wert gesteuert wird und mit dem ein Eingang (R, S) des Master-Flip-Flops (M) gegen das Bezugspotential kurzgeschlossen wird in Anhängigkeit von der globalen Steuergröße (C) und deren Komplement.

7. Vorrichtung nach einem der Ansprüche 1 bis 6,
bei der Ausgänge der Prozessorelemente (PE) am Rand des Rasters auf ihren freien Eingang zurückgekoppelt werden, so daß an den Rändern quasi spiegelsymmetrische Randbedingungen gelten.

## Claims

1. Apparatus for image recording,
- having an arrangement of sensor elements (SE) in a grid,
- in which an associated processor element (PE) is integrated on the basis of the grid for each sensor element,
- in which each processor element has a memory unit (M) for storing values, and
- in which each processor element is connected to the 'processor elements adjacent to it in the grid such that the processor element can record values which are emitted from these adjacent processor elements,
**characterized in that**
- the grid is hexagonal and is of such a size that it can be used for recording a fingerprint which is sufficiently differentiated for personnel identification,
- the sensor elements are formed within a structured, electrically conductive layer for a capacitive measurement,
- the sensor elements or the respectively associated processor elements have circuits by means of which a logic '0' or '1' is generated as a function of the capacitance detected by the sensor element,
- the processor elements are set up to store a logic '0' or '1', and
- each processor element is set up to execute algorithms by means of which
a) the stored value is set from '1' to '0' if at most one connected processor element transmits the value '1', or
b) the stored value is set from '0' to '1' if at least five connected processor elements transmit the value '1', or
c) the stored value is set from '1' to '0' if at least two connected processor elements transmit the value '1', or
d) the stored value is set from '1' to '0' if two connected processor elements in a first pair transmit the value '1' and two connected processor elements in a second pair transmit the value '0', and if the connected processor elements which belong to the same pair are adjacent to one another in the grid and are not adjacent to the processor elements of the respective other pair.

2. Apparatus according to Claim 1,
in which the memory units (M) have at least one first memory and at least one second memory and
in which the processor elements (PE) are set up to store one of two possible values in the first memory and the respective other possible value in the second memory for a measured value which is transmitted from the sensor element (SE).

3. Apparatus according to Claim 1 or 2,
in which each processor element (PE) is formed with at least one neuron MOS circuit, by means of which the values which are transmitted from connected processor elements are weighted in a predetermined manner, are computationally linked to one another and are supplied to an assessment circuit (B).

4. Apparatus according to Claim 3,
in which the following items are provided in the circuit:
a) a first multiplexer (MUX1) with twelve inputs (A, B, C) between which it is possible to switch simultaneously, so that in each case four of the inputs are selected at the same time, and having four outputs (a₁, a₂, b₁, b₂),
b) a second multiplexer (MUX2) with eight inputs (D, E, F, G) between which it is possible to switch simultaneously, so that in each case two of the inputs are selected at the same time, and having two outputs,
c) the assessment circuit (B) with a first input (IN₁) and a second input (IN₂), to which inputs the outputs of the second multiplexer (MUX2) are connected, and with a further input (S), via which the assessement circuit (B) can be caused to supply the logic value '1' when the value at the first input (IN₁) is greater than the value at the second input (IN₂), or, instead of this, to supply the logic value '1' when the value at the first input (IN₁) is less than the value at the second input (IN₂), and
d) six adders (Σ₁, Σ₂, Σ₃, Σ₄, Σ₅, Σ₆) of which in each case two are formed by pairs of neuron MOS transistors,
with the values (X₁, X₂, X₃, X₄, X₅, X₆) which are supplied from the connected processor elements being supplied to the first adder (Σ₁) and to the inputs (A, B, C) of the first multiplexer (MUX1) so that the values of two pairs of connected processor elements (X₁, X₂, X₄, X₅; X₃, X₄, X₆, X₁; X₅, X₆, X₂, X₃) which are adjacent to one another but are not adjacent to the respective other pair are always connected to the outputs of the first multiplexer (MUX1), and
with adders (Σ₂, Σ₃, Σ₄) being connected to the outputs of the first multiplexer (MUX1), and in each case one pair of adders (Σ₁, Σ₆; Σ₂, Σ₅; Σ₃, Σ₄) or the sensor element (SE) being connected to simultaneously selected inputs (D, E, F, G) of the second multiplexer (MUX2) such that the algorithms which are provided can be executed by switching of the multiplexers.

5. Apparatus according to Claim 1 or 2,
in which each processor element is formed with at least one NMOS pass transistor logic circuit, which operates as a switch between a reference earth potential and an assessment circuit (B).

6. Apparatus according to Claim 5,
in which the following items are provided in the circuit:
a) function blocks (F1, F2, F3, F4, R) which each have a number of NMOS transistors which are connected as AND gates or OR gates,
b) a multiplexer (MUX3) with one input and twelve outputs (A, B, C, D, E, F, G, H, I, J, K, L) and
c) a master-slave RS flipflop (M, S) for storing the state and for carrying out the assessment,
in which the function blocks are connected in parallel between the multiplexer (MUX3) and the master-slave RS flipflop (M, S), and only one function block is ever connected to the reference earth potential via the multiplexer (MUX3),
in which inputs for the values (X₁, X₂, X₃, X₄, X₅, X₆) which are transmitted from the connected processor elements and for their complementary values are provided on the function blocks,
in which the first function block (F1) shorts one input (R) of the master flipflop (M) to the reference earth potential when at least five of the six transmitted values have the logic value '1',
in which the second function block (F2) shorts one input (R, S) of the master flipflop (M) to the reference earth potential when at least five of the six transmitted values have the logic value '1' and a signal (X₀) at the output of the slave flipflop (S) has the intended logic value, with the relevant input being chosen by means of transistors by a global control variable (C) and its complement,
in which the third function block (F3) shorts one input (R) of the master flipflop (M) to the reference earth potential when the transmitted values of two connected processor elements which are selected by the multiplexer (MUX3) and are adjacent to one another in a first pair have the logic value '1', and the transmitted values of two mutually adjacent connected processor elements in a second pair, which are not adjacent to the processor elements of the first pair, have the logic value '0',
in which the fourth function block (F4) shorts one input (R, S) of the master flipflop (M) to the reference earth potential depending on whether the transmitted value of a connected processor element which is selected by the multiplexer (MUX3) has the logic value '0' or '1' in one of three intended directions, and
in which the fifth function block (R) has a transistor which is controlled by the logic value supplied by the sensor element (SE) and by means of which one input (R, S) of the master flipflop (M) is shorted to the reference earth potential as a function of the global control variable (C) and its complement.

7. Apparatus according to one of Claims 1 to 6,
in which outputs of the processor elements (PE) at the edge of the grid are fed back to their free input, so that quasi mirror-image symmetrical boundary conditions are created at the edges.

## Revendications

1. Dispositif d'enregistrement d'images, comprenant :
- un aménagement d'éléments de détection (SE) dans un réseau,
- dans lequel est intégré à chaque élément de détection un élément de processeur (PE) correspondant au réseau,
- dans lequel chaque élément de processeur possède une unité de mémoire (M) pour mémoriser des valeurs, et
- dans lequel chaque élément de processeur est connecté aux éléments de processeur adjacents dans le réseau de sorte que l'élément de processeur puisse enregistrer des valeurs qui sont délivrées par ces éléments de processeur adjacents,
**caractérisé en ce que** :
- le réseau est hexagonal et dimensionné de sorte qu'il puisse servir à l'enregistrement d'une empreinte de doigt suffisamment différenciée pour une identification de personne,
- les éléments de détection pour une mesure capacitive sont formés à l'intérieur d'une couche structurée conductrice de l'électricité,
- les éléments de détection ou les éléments de processeur qui leur sont affectés disposent de circuits avec lesquels est générée une valeur logique "0" ou "1" en fonction de la capacité établie par l'élément de détection,
- les éléments de processeur sont aménagés de manière à mémoriser un "0" ou un "1" logique, et
- chaque élément de processeur est aménagé de manière à réaliser les algorithmes, avec lesquels :
a) la valeur mémorisée est activée de "1" à "0", au cas où au maximum un élément de processeur connecté transmet la valeur "1", ou
b) la valeur mémorisée est activée de "0" à "1", au cas où au moins cinq éléments de processeur connectés transmettent la valeur "1", ou
c) la valeur mémorisée est activée de "1" à "0", au cas où au moins deux éléments de processeur connectés transmettent la valeur "1", ou
d) la valeur mémorisée est activée de "1" à "0", au cas où deux éléments de processeur connectés d'une première paire transmettent la valeur "1" ou que deux éléments de processeur connectés d'une seconde paire transmettent la valeur "0" et au cas où les éléments de processeur connectés appartenant à la même paire sont mutuellement adjacents dans le réseau et ne sont pas adjacents aux éléments de processeur de l'autre paire respective.

2. Dispositif selon la revendication 1,
dans lequel les unités de mémoire (M) possèdent au moins une première mémoire et une seconde mémoire, et
dans lequel les éléments de processeur (PE) sont aménagés de manière à mémoriser, pour une valeur de mesure transférée par l'élément de détection (SE), une de deux valeurs possibles dans la première mémoire et l'autre valeur possible respective dans la seconde mémoire.

3. Dispositif selon la revendication 1 ou 2,
dans lequel chaque élément de processeur (PE) est conçu avec au moins un circuit du type neurone-MOS, avec lequel les valeurs transférées par des éléments de processeur connectés sont pondérées de manière prédéterminée, combinées l'une à l'autre par calcul et acheminées à un circuit de pondération (B).

4. Dispositif selon la revendication 3,
dans lequel il est prévu dans le. circuit :
a) un premier multiplexeur (MUX1) avec douze entrées (A, B, C) entre lesquelles on peut commuter simultanément, de sorte que respectivement quatre des entrées soient choisies simultanément, et avec quatre sorties (a₁, a₂, b₁, b₂),
b) un second multiplexeur (MUX2) avec huit entrées (D, E, F, G) entre lesquelles on peut commuter simultanément, de sorte que respectivement deux des entrées soient choisies simultanément, et avec deux sorties,
c) le circuit de pondération (B) avec une première entrée (IN₁) et une seconde entrée (IN₂), à laquelle les sorties du second multiplexeur (MUX2) sont connectées, et avec une autre entrée (S) par laquelle le circuit de pondération (B) peut être autorisé à délivrer la valeur logique "1", lorsque la valeur à la première entrée (IN1) est plus grande que la valeur à la seconde entrée (IN2) ou, en lieu et place, à délivrer la valeur logique "1", lorsque la valeur à la première entrée (IN1) est plus petite que la valeur à la seconde entrée (IN2), et
d) six sommateurs (Σ₁, Σ₂, Σ₃, Σ₄, Σ₅, Σ₆), dont respectivement deux sont formés par des paires de transistors du type neurone-MOS,
dans lequel les valeurs (X₁, X₂, X₃, X₄, X₅, X₆) délivrées par les éléments de processeur connectés sont acheminées au premier sommateur (Σ₁) et aux entrées (A, B, C) du premier multiplexeur (MUX1), de sorte que les valeurs de deux paires d'éléments de processeur connectés (X₁, X₂, X₄, X₅; X₃, X₄, X₆, X₁; X₅, X₆, X₂, X₃) adjacents les uns aux autres, mais non adjacents à l'autre paire respective s'appliquent aux sorties du premier multiplexeur (MUX1), et
dans lequel les sommateurs (Σ₂, Σ₃, Σ₄) sont connectés aux sorties du premier multiplexeur (MUX1) et, respectivement, une paire de sommateurs (Σ₁, Σ₆; Σ₂, Σ₅; Σ₃, Σ₄) ou l'élément de détection (SE) est connecté(e) à des entrées simultanément choisies (D, E, F, G) du second multiplexeur (MUX2) de sorte que les algorithmes prévus puissent être réalisés par commutation des multiplexeurs.

5. Dispositif selon la revendication 1 ou 2,
dans lequel chaque élément de processeur est construit avec au moins un circuit logique de transistors de passage NMOS, qui opère comme commutateur entre un potentiel de référence et un circuit de pondération (B).

6. Dispositif selon la revendication 5,
dans lequel sont prévus dans le circuit :
a) des blocs fonctionnels (F1, F2, F3, F4, R) constitués respectivement d'un certain nombre de transistors NMOS commutés en portes ET ou en portes OU,
b) un multiplexeur (MUX3) avec une entrée et douze sorties (A, B, C, D, E, F, G, H, I, J, K, L), et
c) une bascule bistable maître-esclave-RS (M, S) pour mémoriser l'état et pour réaliser la pondération,
dans lequel les blocs fonctionnels sont connectés en parallèle entre le multiplexeur (MUX3) et la bascule bistable maître-esclave-RS (M, S) et que seul un bloc fonctionnel est toujours connecté au potentiel de référence via le multiplexeur (MUX3),
dans lequel des entrées pour les valeurs (X₁, X₂, X₃ X₄, X₅, X₆) transmises par les éléments de processeur connectés et pour leurs valeurs complémentaires sont présentes sur les blocs fonctionnels,
dans lequel le premier bloc fonctionnel (F1) court-circuite une entrée (R) de la bascule bistable maîtresse (M) au potentiel de référence lorsqu'au moins cinq des six valeurs transmises possèdent la valeur logique "1",
dans lequel le deuxième bloc fonctionnel (F2) court-circuite une entrée (R, S) de la bascule bistable maîtresse (M) au potentiel de référence, lorsqu'au moins cinq des six valeurs transférées possèdent la valeur logique "1" et qu'un signal (X₀) à la sortie de la bascule bistable asservie (S) possède une valeur logique prévue, l'entrée concernée étant choisie au moyen de transistors par une grandeur de commande globale (C) et son complément,
dans lequel le troisième bloc fonctionnel (F3) court-circuite une entrée (R) de la bascule bistable maîtresse (M) au potentiel de référence lorsque les valeurs transférées de deux éléments de processeur connectés d'une première paire choisis par le multiplexeur (MUX3) adjacents l'un à l'autre possèdent la valeur logique "1" et que les valeurs transférées de deux éléments de processeur connectés d'une seconde paire adjacents l'un à l'autre, qui ne sont pas adjacents aux éléments de processeur de la première paire, possèdent la valeur logique "0",
dans lequel le quatrième bloc fonctionnel (F4) court-circuite une entrée (R, S) de la bascule bistable maîtresse (M) au potentiel des référence selon que la valeur transférée d'un élément de processeur connecté choisi par le multiplexeur (MUX3) possède la valeur logique "0" ou "1" dans l'une de trois directions prévues, et
dans lequel le cinquième bloc fonctionnel (R) présente un transistor, qui est commandé par la valeur logique délivrée par l'élément de détection (SE) et avec lequel une entrée (R, S) de la bascule bistable maîtresse (M) est court-circuitée au potentiel de référence en fonction de la grandeur de commande globale (C) et de son complément.

7. Dispositif selon l'une quelconque des revendications 1 à 6,
dans lequel les sorties des éléments de processeur (PE) sur le bord du réseau sont rétrocouplées sur leur entrée libre de sorte que l'on obtienne des conditions marginales avec une quasi-symétrie de miroir sur les bords.
